# EUROPEAN PATENT APPLICATION

(11) **EP 2 811 420 A2**
(43) Date of publication of application: **10.12.2014**
(21) Application number: 14170141.7
(22) Date of filing: 28.05.2014
(51) Int. Cl.: G06F 21/36

(54) **Method for quickly executing application on lock screen in mobile device, and mobile device therefor**

(30) Priority: 07.06.2013 KR 20130065238
(71) Applicant: Samsung Electronics Co., Ltd, Gyeonggi-do 443-742 (KR)
(72) Inventor: Kim, Moo-Rim, 443-742 Gyeonggi-do (KR); Kim, Ji-Hoon, 443-742 Gyeonggi-do (KR); Lee, Ki-Bok, 443-742 Gyeonggi-do (KR); Lee, Dong-Chang, 443-742 Gyeonggi-do (KR); Lee, Jae-Woong, 443-742 Gyeonggi-do (KR); Chang, Won-Suk, 443-742 Gyeonggi-do (KR); Hwang, Seong-Taek, 443-742 Gyeonggi-do (KR)
(74) Representative: Grünecker, Kinkeldey, Stockmair & Schwanhäusser

(57) **Abstract**

A method for quickly executing an application on a lock screen in a mobile device is provided. The method includes displaying a lock screen on which a plurality of executable objects are displayed; receiving an unlock command by an input means; determining whether the received unlock command coincides with a preset unlock command; unlocking the lock screen if the received unlock command coincides with the preset unlock command; and executing an application associated an object corresponding to a last position of the input means. By doing so, the mobile device may quickly execute an application upon unlocking.

## Description

### BACKGROUND

### 1.Field of Invention

The present invention generally relates generally to a method and apparatus for unlocking, and more particularly, to a method and apparatus for easily unlocking a mobile device.

### 2. Description of the Related Art

Due to the rapid development of communication technology, the functionalities of mobile devices have been gradually expanded. In line with this, a wide variety of User Interfaces (UIs) and a variety of functions using the UIs have been provided.

In particular, mobile devices with a touch screen have different types of input device locking/unlocking functions to limit unnecessary input errors in the standby state or to limit fraudulent use by other users. Generally, for a mobile device, its locking function should be activated or enabled by the user in order for the mobile device to perform the locking function.

The mobile device with a locking function may activate the locking function if there is no input from the user for a predetermined time. Accordingly, the screen or functions of the mobile device may be inactivated, if the user makes no input for a predetermined time while using or enjoying a specific function of the mobile device. In order to release or turn off the lock mode (e.g., the touch screen hold state), the typical mobile device releases the lock mode in a predetermined method.

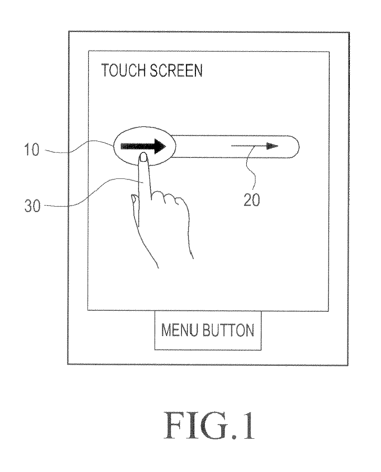

An example of a way to release the lock mode may include a slide-to-unlock method as illustrated in FIG. 1.

Referring to FIG. 1, the user may start an unlock operation by touching a touch screen of a mobile device with a finger 30. Specifically, the user may make a touch in a position corresponding to an unlock image 10, and then move the finger 30 in the right direction 20 while keeping the contact with the touch screen, thereby completing the unlock operation.

In this way, conventionally, a touch input should move along a predetermined path beginning at a preset position, in order for the unlocking to be completed.

Conventionally, if the user of the mobile device releases the lock mode, the mobile device may load and display the home screen or a recently used application. For example, the mobile device may enter its main menu, when the user was not using or enjoying a function of the mobile device. The recently used application may be displayed, if the mobile device is switched to the unlock state in the case where the mobile device was switched to the lock state while the user was enjoying functions of the mobile device.

However, if the mobile device uses the simple unlocking method to avoid the hassle of unlocking, the mobile device may be exposed to third parties or used fraudulently, causing security problems. Therefore, there is a need for user authentication on the mobile device, unlocking of which is simply implemented, in addition to maintaining the security by preventing fraudulent uses by third parties or unwanted input errors in the mobile device, which are the original purpose of the locking function. In addition, conventionally, even though the mobile device is unlocked, only the home screen or the recently used application may be displayed. Therefore, the user inconveniently perform the menu entry procedure for executing a user desired function after releasing the lock mode using the predetermined unlocking method, if the user desires to use a specific function while the mobile device is locked or in the inactive state.

### SUMMARY

The present invention has been made to address at least the above-mentioned problems and/or disadvantages and to provide at least the advantages described below. Accordingly, an aspect of the present invention is to provide a method and apparatus for easily and quickly executing a user desired application in a lock mode.

Another aspect of the present invention is to provide a method and apparatus for providing a locking method capable of preventing fraudulent use of a mobile device by a third party, and for activating a specific application immediately upon unlocking.

In accordance with an aspect of the present invention, there is provided a method for quickly executing an application on a lock screen in a mobile device. The method includes displaying a lock screen on which a plurality of executable objects are displayed; receiving an unlock command by an input means; determining whether the received unlock command coincides with a preset unlock command; unlocking the lock screen if the received unlock command coincides with the preset unlock command; and executing an application associated with an object corresponding to a last position of the input means.

In accordance with another aspect of the present invention, there is provided a method for quickly executing an application on a lock screen in a mobile device. The method includes displaying a lock screen on which a plurality of executable objects are displayed; tracking a trajectory along which a drag input is made after a touch input; determining whether an order of objects on the trajectory coincides with a preset order of objects; unlocking the lock screen if the order of objects on the trajectory coincides with the preset order of objects; and executing, if the touch input is released, an application associated with an object corresponding to a position where the touch input is released.

In accordance with a further another aspect of the present invention, there is provided a mobile device for quickly executing an application on a lock screen. The mobile device includes a display configured to display a lock screen on which a plurality of executable objects are displayed; and a controller configured to determine, upon receiving an unlock command by an input means, whether the received unlock command coincides with a preset unlock command, to unlock the lock screen if the received unlock command coincides with the preset unlock command, and to execute an application associated with an object corresponding to a last position of the input means.

### BRIEF DESCRIPTION OF THE DRAWINGS

The above and other aspects, features and advantages of certain embodiments of the present invention will be more apparent from the following description taken in conjunction with the accompanying drawings, in which:
FIG. 1 illustrates a screen showing of the conventional slide-to-unlock method;
FIG. 2 is a block diagram of an internal structure of a mobile device according to an embodiment of the present invention;
FIG. 3 is a front perspective view of a mobile device according to an embodiment of the present invention;
FIG. 4 is a rear perspective view of a mobile device according to an embodiment of the present invention;
FIG. 5 is a flowchart illustrating a method for setting a locking method according to an embodiment of the present invention;
FIGs. 6A and 6B illustrate examples of a lock screen on which multiple objects are arranged according to an embodiment of the present invention;
FIGs. 7A and 7B illustrate an example of a screen for setting of the unlocking method in FIG. 5;
FIG. 8 is a flowchart illustrating a method for executing a specific application upon unlocking in a mobile device according to an embodiment of the present invention;
FIGs. 9A to 9D illustrate examples of an unlocking process on a lock screen according to an embodiment of the present invention;
FIGs. 10A to 10D illustrate examples of an unlocking process on a lock screen according to another embodiment of the present invention; and
FIGs. 11A to 11C illustrate examples of a process of executing a specific application on a lock screen according to another embodiment of the present invention.

Throughout the drawings, like reference numerals will be understood to refer to like parts, components, and structures.

### DETAILED DESCRIPTION OF EMBODIMENTS OF THE PRESENT INVENTION

The following description with reference to the accompanying drawings is provided to assist in a comprehensive understanding of embodiments of the present invention as defined by the claims. It includes various specific details to assist in that understanding but these are to be regarded as mere examples. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to their dictionary meanings, but are merely used to enable a clear and consistent understanding of the invention. Accordingly, it should be apparent to those skilled in the art that the following description of embodiments of the present invention is provided for illustration purposes only and not for the purpose of limiting the invention as defined by the appended claims.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement errors, measurement accuracy limitations and other factors known to those of skill in the art, may occur in amounts that do not preclude the effect the characteristic was intended to provide.

The present invention provides a method for quickly executing an application on a lock screen. To this end, the present invention includes displaying a lock screen on which a plurality of objects are displayed; determining whether two or more objects among the plurality of objects are consecutively touched by an input means; determining whether an order of the consecutively touched objects coincides with a preset order of objects; unlocking the lock screen if the order of the consecutively touched objects coincides with the preset order of objects; and executing an application corresponding to an object in the last position of the input means after the unlocking. By doing so, it is possible to quickly execute an application upon unlocking.

In the present invention, a mobile device may be any device with a touch screen, and the mobile device may be called a mobile terminal, a communication terminal, a portable communication terminal, a portable mobile terminal, and the like.

For example, the mobile device may be a smart phone, a cellular phone, a game console, a Television (TV), a display device, a car head unit, a notebook computer, a laptop computer, tablet computer, a Personal Multimedia Player (PMP), a Personal Digital Assistant (PDA), and the like. The mobile device may be implemented as a pocket-sized portable communication terminal having a wireless communication function. Further, the mobile device may be a flexible display device.

A typical configuration of the mobile device may be for a cellular phone, and some components in the typical configuration of the mobile device may be omitted or changed as needed.

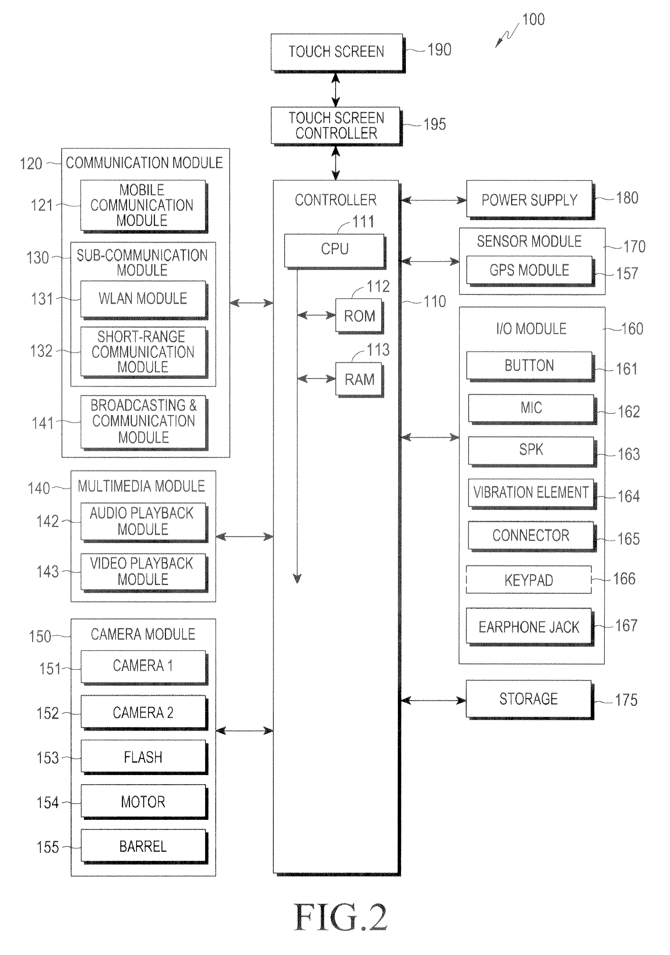

FIG. 2 is a block diagram an internal structure of a mobile device according to an embodiment of the present invention.

Referring to FIG. 2. a mobile device 100 may be connected to the external electronic devices using at least one of a communication module 120, a connector 165 and an earphone jack 167. The electronic devices may include at least one of various devices such as an earphone, an external speaker, a Universal Serial Bus (USB) memory, a charger, a cradle/dock, a Digital Multimedia Broadcasting (DMB) antenna, a mobile payment device, a healthcare device (e.g., a blood glucose meter and the like), a game console, a car navigation device, and the like, all of which may be detachably connected to the mobile device 100 by wires. In addition, the electronic devices may include at least one of a Bluetooth device, a Near Field Communication (NFC) device, a WiFi Direct device, a wireless Access Point (AP), and the like, all of which may be wirelessly connected to the mobile device 100. The mobile device 100 may be connected to any one of another mobile device and an electronic device (e.g., a cellular phone, a smart phone, a tablet Personal Computer (PC), a desktop PC and a server) by wires or wirelessly.

The mobile device 100 may include at least one touch screen 190 and at least one touch screen controller 195. In the present invention, the touch screen 190 and the touch screen controller 195 are assumed to be a display and a display controller, respectively. In addition, the mobile device 100 includes a controller 110, the communication module 120, a multimedia module 140, a camera module 150, an Input/Output (I/O) module 160, a sensor module 170, a storage 175, and a power supply 180.

The controller 110 may include a Central Processing Unit (CPU) 111, a Read Only Memory (ROM) 112 configured to store a control program for control of the mobile device 100, and a Random Access Memory (RAM) 113 configured to temporarily store signals or data received from the outside of the mobile device 100 and to be used as a workspace for operations performed in the mobile device 100. The CPU 111 may include a multi-core processor such as a single-core processor, a dual-core processor, a triple-core processor, a quad-core processor, and the like. The CPU 111, the ROM 112 and the RAM 113 may be interconnected through an internal bus.

The controller 110 controls the communication module 120, the multimedia module 140, the camera module 150, the I/O module 160, the sensor module 170, the storage 175, a projector module (not shown), the power supply 180, the touch screen 190 and the touch screen controller 195.

According to an embodiment of the present invention, the controller 110 allows the user to release or turn off lock settings using a plurality of executable graphic objects or graphic items arranged on the touch screen 190. Specifically, the controller 110 may detect a user input which may be made by a user input means such as a user's finger(s) and a stylus pen which consecutively touches at least two objects, consecutively approaches the objects, or is consecutively placed close to the objects, while a lock screen, on which a plurality of executable objects are arranged, is displayed. For example, objects corresponding to an unlock command may be selected in a way to sequentially and individually touch each of the objects, or to touch the touch screen 190 and then make a drag input while maintaining the touch.

If the user input coincides with a preset unlock command, the controller 110 unlocks the lock screen (or the mobile device 100), identifies an object corresponding to the position on the touch screen 190, where the last user input has occurred, and executes an application associated with the object. According to the present invention, the controller 110 may immediately execute the application upon the unlocking.

The user input through the touch screen 190 may include any one of a direct touch input made by directly touching an object, and an indirect touch input or a hovering input made by approaching an object within a preset recognition distance without directly touching the object. For example, if the user input means is placed close to the touch screen 190, an object located in the vicinity of the user input means is selected. The user input may include not only the user input through the touch screen 190, but also a switch/button input through a button 161 or a keypad 166, a voice input through a microphone (MIC) 162, and the like. Accordingly, the user may select the objects corresponding to the unlock command through several different ways, including through the hovering method for indirectly touching objects.

The objects or items (or function items) are or may be displayed on the touch screen 190 of the mobile device 100. The objects or items may represent at least one of, for example, applications, menus, documents, widgets, photos, videos, e-mails, Short Message Service (SMS) messages, and Multimedia Messaging Service (MMS) messages, and may be created, selected, executed, deleted, canceled, stored and changed by the user input means. The objects or items include buttons, icons (or shortcut icons), thumbnail images, or folders in which the mobile device 100 stores at least one object. The objects or items may be displayed in the form of image, text or the like. A shortcut icon is an image that is displayed on the touch screen 190 of the mobile device 100, for fast execution of each application, or of a call, contacts, menu and the like, which are provided by default in the mobile device 100, and if a command or selection for executing the shortcut icon is entered, the mobile device 100 executes the relevant application.

As such, a plurality of executable objects displayed on the lock screen according to an embodiment of the present invention may include at least one of shortcut icons for executing applications, widgets, icons representing documents in a specific file format, photos, and folders.

For example, the user may make or create his or her own objects or items by drawing images, texts, and the like in person. In the case of user customized objects or items such as the user specific objects or items, since the user customized objects or items are created by the user himself/herself, if user desired applications are linked to the objects, only the user may determine which applications are linked to the objects. Accordingly, it is possible to provide a hidden method for preventing other people from determining the purpose of the user customized objects displayed on the lock screen, and to provide a user customized lock screen. By using the user customized objects or items as unlock commands, it is possible to block the access to the objects or items by people other than the user, thereby protecting the user's privacy.

The controller 110 may detect a user input event such as a hovering event which may occur as the user input means such as the user's finger approaches the touch screen 190 or is placed close thereto.

If a user input event occurs for a preset item or according to a preset method, the controller 110 performs a preset program operation corresponding to the user input event. According to an embodiment of the present invention, if an event for any one of objects occurs while a lock screen, on which a plurality of executable objects are arranged, is displayed (e.g., if a text message is received while a text message object is displayed), the controller 110 may display contents of the occurred event on the touch screen 190. Text contents received as the contents of the occurred event may be displayed on the lock screen in the position close to the text message object. Subsequently, if the received text contents are selected, the controller 110 directly receives a response by the input means, and then, sends the received response to the other party. As such, according to an embodiment of the present invention, it is possible to provide a method capable of directly executing an application without unlocking the lock screen.

The communication module 120 includes a mobile communication module 121, a sub-communication module 130 and a broadcasting and communication module 141.

Depending on its performance, the mobile device 100 may include at least one of the mobile communication module 121, a Wireless Local Area Network (WLAN) module 131 and a short-range communication module 132.

The mobile communication module 121, under control of the controller 110, connects the mobile device 100 to the external electronic devices by mobile communication using at least one or multiple antennas. The mobile communication module 121 transmits and receives wireless signals for voice calls, video calls, SMS messages or MMS messages, to/from a cellular phone, a smart phone, a tablet PC or another electronic device, phone numbers of all of which are entered or registered in the mobile device 100.

The sub-communication module 130 includes at least one of the WLAN module 131 and the short-range communication module 132. For example, the sub-communication module 130 may include one or both of the WLAN module 131 and the short-range communication module 132.

The WLAN module 131, under control of the controller 110, accesses the Internet through a wireless Access Point (AP). The WLAN module 131 supports the WLAN standard IEEE802.11 x defined by the Institute of Electrical and Electronic Engineer (IEEE). The short-range communication module 132, under control of the controller 110, enables wireless short-range communication between the mobile device 100 and the external electronic devices. The short-range communication scheme may include Bluetooth, Infrared Data Association (IrDA), WiFi Direct, NFC, and the like.

The broadcasting and communication module 141, under control of the controller 110, receives broadcast signals (e.g., TV broadcast signals, radio broadcast signals or data broadcast signals) and additional broadcast information (e.g., Electric Program Guide (EPG) or Electric Service Guide (ESG)) transmitted from the broadcasting stations, via a broadcasting and communication antenna.

The multimedia module 140 includes an audio playback module 142 and a video playback module 143. The audio playback module 142, under control of the controller 110, may play digital audio files (with a file extension of, for example, mp3, wma, ogg or wav), which are stored in the storage 175 or received from the outside of the mobile device 100. The video playback module 143, under control of the controller 110, may play digital video files (with a file extension of, for example, mpeg, mpg, mp4, avi, mov, or mkv), which are stored in the storage 175 or received from the outside of the mobile device 100. The multimedia module 140 may be incorporated into the controller 110.

The camera module 150 includes at least one of a first camera 151 and a second camera 152, which capture or shoot still images or videos under control of the controller 110. In addition, the camera module 150 includes at least one of a barrel 155 for performing zoom-in/out to shoot a subject, a motor 154 for controlling movements of the barrel 155, and a flash 153 for providing the secondary light source needed to shoot a subject. The first camera 151 may be disposed on the front of the mobile device 100, while the second camera 152 may be disposed on the rear of the mobile device 100. Each of the first and second cameras 151 and 152 may include a lens system, an image sensor and the like. Each of the first and second cameras 151 and 152 convert an optical image signal received through the lens system into an electrical image signal and provide the electrical image signal to the controller 110, and the user may shoot the still images or videos through the first and second cameras 151 and 152.

The I/O module 160 includes at least one of at least one button 161, at least one microphone (MIC) 162, at least one speaker (SPK) 163, at least one vibration element 164, the connector 165, the keypad 166, and the earphone jack 167. The I/O module 160 is not limited thereto, and a cursor control device such as a mouse, a trackball, a joystick or cursor direction keys may be provided to the I/O module 160 to control movements of the cursor on the touch screen 190.

The button 161 may be formed on the front, side or rear of the housing (or casing) of the mobile device 100, and includes at least one of a Power/Lock button, a Volume button, a Menu button, a Home button, a Back button, and a Search button.

The microphone 162, under control of the controller 110, receives voice or sound and generate an electrical signal thereof. The speaker 163, under control of the controller 110, outputs sounds corresponding to various signals or data (e.g., wireless data, broadcast data, digital audio data, digital video data and the like), to the outside of the mobile device 100. The speaker 163 may output sounds (e.g., button manipulation tones, Ring Back Tones (RBT), the other party's voice and the like) corresponding to the functions executed by the mobile device 100. One or multiple speakers 163 may be formed in a proper position or positions of the housing of the mobile device 100.

The vibration element 164, under control of the controller 110, converts electrical signals into mechanical vibrations. For example, upon receiving a voice or video call from another device, the mobile device 100 in a vibration mode may activate or enable the vibration element 164. One or multiple vibration elements 164 may be formed in the housing of the mobile device 100. The vibration element 164 may operate in response to a user input through the touch screen 190. The connector 165 is an interface for connecting the mobile device 100 to the external electronic devices or power sources. The controller 110 may transmit the data stored in the storage 175 of the mobile device 100 to the external electronic devices or receive data from the external electronic devices, via a wired cable connected to the connector 165. The mobile device 100 may receive power from a power source or charge its rechargeable battery using the power source, via a wired cable connected to the connector 165

The keypad 166 receives key inputs from the user under control of the mobile device 100. The keypad 166 includes a physical keypad (not shown) formed on the mobile device 100 and/or a virtual keypad (not shown) displayed on the touch screen 190. The physical keypad formed on the mobile device 100 may be optional depending on the performance or structure of the mobile device 100.

An earphone may be inserted in the earphone jack 167 and connected to the mobile device 100.

The sensor module 170 includes at least one sensor for detecting a state of the mobile device 100 and the environment around the mobile device 100. For example, the sensor module 170 may include at least one of a proximity sensor for detecting the user's proximity to the mobile device 100, an illuminance sensor for detecting the amount of light around the mobile device 100, a motion sensor for detecting movements (e.g., rotation, acceleration or vibration) of the mobile device 100, a geo-magnetic sensor for detecting the point of the compass for the mobile device 100 using the Earth's magnetic field, a gravity sensor for detecting the direction of the gravity, an altimeter for detecting an altitude by measuring the atmospheric pressure, and a Global Positioning System (GPS) module 157.

The GPS module 157 receives radio waves from a plurality of GPS satellites in the Earth orbit, and calculates the location of the mobile device 100 using the Time of Arrival (ToA) from the GPS satellites to the mobile device 100.

The storage 175, under control of the controller 110, stores the signals or data which are input/output according to operations of the communication module 120, the multimedia module 140, the camera module 150, the I/O module 160, the sensor module 170 and the touch screen 190. The storage 175 stores applications and a control program for control of the mobile device 100 or the controller 110.

The term "storage" as used herein may refer to any data storage device such as the storage 175, the ROM 112 and the RAM 113 in the controller 110, or a memory card (e.g., a Secure Digital (SD) card, a memory stick, or the like) mounted in the mobile device 100. The storage 175 may include a non-volatile memory, a volatile memory, a Hard Disk Drive (HDD), or a Solid State Drive (SSD).

The storage 175 stores applications having various functions such as the navigation, video call, game, and time-based alarm applications; images for providing Graphical User Interfaces (GUIs) associated with the applications; user information; documents; databases or data related to the ways to process touch inputs; background images (e.g., a menu screen, a standby screen, and the like) or operation programs needed to drive the mobile device 100; or images captured by the camera module 150.

The storage 175 may be a machine (e.g., computer)-readable medium, and the term "machine-readable medium" may refer to a medium that provides data to the machine so that the machine may perform a specific function. The storage 175 may include non-volatile media and volatile media. All the media need to be configured such that commands carried by the media may be detected by a physical mechanism that reads the commands into the machine.

The machine-readable medium includes, though is not limited to, at least one of floppy disk, flexible disk, hard disk, magnetic tape, Compact Disc Read-Only Memory (CD-ROM), optical disk, punch card, paper tape, RAM, Programmable Read-Only Memory (PROM), Erasable PROM (EPROM), and FLASH-EPROM.

The power supply 180, under control of the controller 110, supplies power to one or multiple rechargeable batteries mounted in the housing of the mobile device 100. One or multiple rechargeable batteries supply power to the mobile device 100. The power supply 180 may supply, to the mobile device 100, the power that is received from the external power source via a wired cable connected to the connector 165. The power supply 180 may supply, to the mobile device 100, the power that is wirelessly received from the external power source by wireless charging technology.

The mobile device 100 includes at least one touch screen 190 that provides, to the user, GUIs corresponding to various services (e.g.. call, data transfer, broadcasting, photo-shooting and the like).

The touch screen 190 outputs an analog signal corresponding to at least one user input to a GUI, to the touch screen controller 195. The touch screen 190 may receive at least one user input through the user's body (e.g., fingers). The touch screen 190 may also receive continuous movement of a single touch. The touch screen 190 outputs an analog signal corresponding to the received continuous movement of the touch, to the touch screen controller 195.

As used herein, the term "touch" is not limited to the contact touch (or direct contact) between the touch screen 190 and the user input means such as the finger, and includes noncontact touch (or indirect contact) between the touch screen 190 and the user input means, a detectable recognition distance or gap between which may be set to, for example, 1 cm. The distance or gap in which the touch screen 190 detects the user input means may be subject to change depending on the performance or structure of the mobile device 100. In particular, the touch screen 190 may be configured to differently output the values (e.g., analog voltage or current values) detected by a direct touch event and an indirect touch event (or hovering event), so as to make it possible to separately detect the direct touch event and the hovering event which are made by direct and indirect contacts between the touch screen 190 and the user input means, respectively.

The touch screen 190 may be implemented in, for example, a capacitive type, an infrared type, an acoustic wave type, or a combination thereof.

The touch screen controller 195 converts an analog signal received from the touch screen 190 into a digital signal, and provides the digital signal to the controller 110. The controller 110 controls UIs displayed on the touch screen 190 using the digital signal received from the touch screen controller 195. For example, the controller 110 may select or execute shortcut icons (not shown) or objects displayed on the touch screen 190 in response to the direct touch event or the hovering event. The touch screen controller 195 may be incorporated into the controller 110.

The touch screen controller 195 determines not only the user input position but also the hovering gap or distance by detecting the values (e.g., current values or the like) output through the touch screen 190, and converts the determined distance values into a digital signal (e.g., Z coordinates) and provides the digital signal to the controller 110. The controller 110 detects various user inputs which are received not only through the touch screen 190, but also through the camera module 150, the I/O module 160, the sensor module 170, and the like. The user input may include not only the touch, but also various types of information being input to the mobile device 100, such as the user's gesture, voice, eye movement, bio signal and the like. The controller 110 controls the mobile device 100 to perform a predetermined operation or function corresponding to the detected user input.

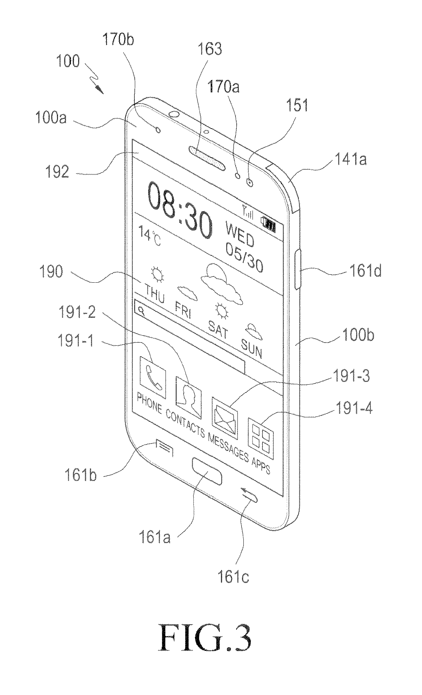

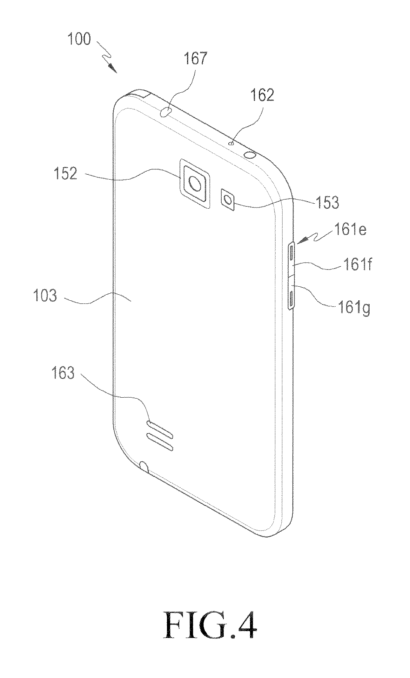

FIG. 3 is a front perspective view of a mobile device according to an embodiment of the present invention, and FIG. 4 is a rear perspective view of a mobile device according to an embodiment of the present invention.

Referring to FIGs. 3 and 4, the touch screen 190 is disposed in the center of a front 100a of the mobile device 100. The touch screen 190 may be formed large enough to occupy most of the front 100a of the mobile device 100. FIG. 3 illustrates an example of a main home screen displayed on the touch screen 190. The main home screen may be the first screen that is displayed on the touch screen 190 when the mobile device 100 is powered on. If the mobile device 100 has different home screens of several pages, the main home screen may the first home screen among the home screens of several pages. On the main home screen is displayed shortcut icons 191-1, 191-2 and 191-3 for executing the frequently used applications, a Switch-to-Main Menu (or Apps) key 191-4, the time, the weather and the like. According to an embodiment of the present invention, a lock screen may be implemented in the same manner as the home screen. In this case, the shortcut icons 191-1, 191-2 and 191-3 may be replaced by user customized objects created by the user, and the arrangement of the user customized objects may be changed depending on the user settings.

If the user selects or touches the Switch-to-Main Menu key 191-4, a menu screen is displayed on the touch screen 190. On the top of the touch screen 190 is displayed a status bar 192 indicating the status of the mobile device 100, such as battery level, received signal strength, current time, and the like.

Under the touch screen 190 may be formed a Home button 161 a, a Menu button 161b and a Back button 161c.

The Home button 161 a is used to display the main home screen on the touch screen 190. For example, if the Home button 161a is selected while any home screen different from the main home screen, or a menu screen is displayed on the touch screen 190, the main home screen is displayed on the touch screen 190. If the Home button 161a is selected while applications are executed on the touch screen 190, the main home screen illustrated in FIG. 3 is displayed on the touch screen 190. The Home button 161 a may be used to display the recently used applications or the task manager on the touch screen 190.

The Menu button 161b may provide connection menus which can be displayed on the touch screen 190. The connection menus may include an Add Widget menu, a Change Wallpaper menu, a Search menu, an Edit menu, a Preferences menu and the like.

The Back button 161c is used to display the just previous screen or to exit the most recently used application.

On an edge of the front 100a of the mobile device 100 is disposed the first camera 151, an illuminance sensor 170a and a proximity sensor 170b. On a rear 103 of the mobile device 100 is disposed the second camera 152, the flash 153 and the speaker 163. On sides 100b of the mobile device 100 may be disposed, for example, a Power/Lock button 161d, a Volume Button 161 e (with a Volume-Up button 161f and a Volume-Down button 161 g), a terrestrial DMB antenna 141a, one or multiple microphones 162, and the like. The DMB antenna 141 a may be detachably fixed to the mobile device 100.

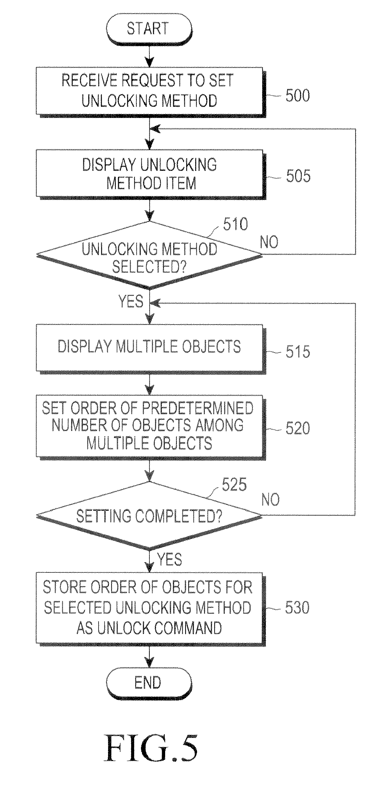

FIG. 5 is a flowchart illustrating a method for setting a locking method according to an embodiment of the present invention.

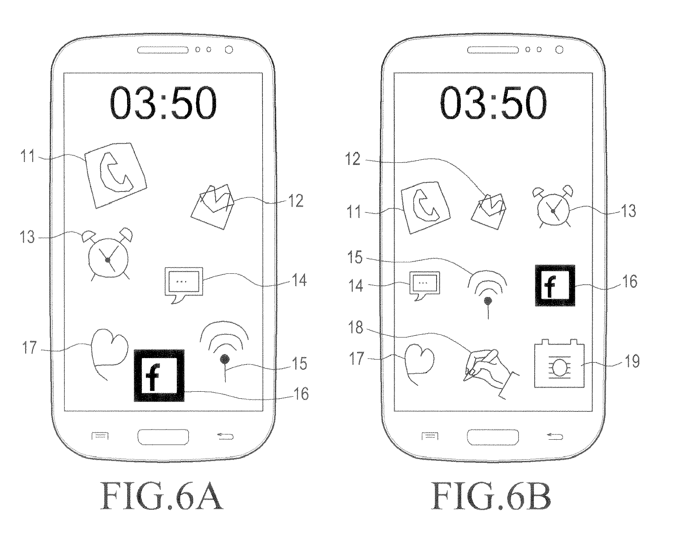

Referring to FIG. 5, upon receiving a request to set the unlocking method in step 500, the controller 110 displays unlocking method items in step505. According to an embodiment of the present invention, the unlocking method items include an unlocking method that uses the order of a set of objects, which is set by the user, and an unlocking method that uses a predetermined pattern which is drawn with two or more objects selected by the user. The former unlocking method that uses the order of objects is illustrated in FIG. 6A, while the latter unlocking method that uses a predetermined pattern drawing with objects is illustrated in FIG. 6B.

In FIG. 6A, according to an embodiment of the present invention, for example, objects 11 to 17 correspond to shortcut icons for executing applications, and are arranged on the touch screen 190 as a lock screen in a random way. The unlocking method may have the order of a set of objects, which is set by the user. For example, the controller 110 determines whether to unlock the lock screen by determining whether the order of objects, which corresponds to a consecutive touch input, coincides with the order of objects, which corresponds to an unlock command.

Some of the objects 11 to 17 may be displayed to include at least one of image and text. The object, which represents an application corresponding to the object, may correspond to an image of a character, a symbol, and the like, used for easily identifying the object, or correspond to a text such as a logo. The object may include a title describing the attributes of the object in the form of text for identifying the object. The number, type and arrangement of objects on the lock screen may be subject to change depending on the user settings. For example, application objects (or icons) to be displayed on the lock screen for fast execution may be set or registered in advance through user settings, so the user can create a user customized lock screen. The objects or icons may represent most recently used applications according to the user's history.

For example, a phone-shaped object 11, which is linked to a call application, is used to execute the call application. A mail-shaped object 12 is linked to a message application, and if the object 12 is selected, a screen is displayed on which the user sends and receives messages by executing the message application. A clock-shaped object 13 indicates that the object 13 is linked to an alarm application. A chat window-shaped object 14 indicates that the object 14 is linked to an interactive Social Network Service (SNS) application. A WiFi-shaped object 15 indicates that the object 15 is linked to a WLAN application. A character-shaped object 16 indicates that the object 16 is linked to an SNS application such as Facebook™. A heart-shaped object 17 indicates that the object 17 is linked to an application set by the user, and represents specific function that is known only to the user. Although it is assumed herein that an application is linked to an object, it should be noted that various functions of the mobile device 100, such as a shortcut function, may be linked to an object.

As described above, the objects 11 to 17 include a variety of visual objects, such as shortcut icons for executing applications, widgets, icons representing documents in various file formats, photos, folders, and the like, and may include some visual objects selected from them.

The applications, which are applications executable in the mobile device 100, may be stored or installed in the mobile device 100 in advance, or may be downloaded in the mobile device 100 from the external application web server. The images and texts representing the objects 11 to 17 may be created by the user himself/herself, or may be downloaded in the mobile device 100 from the external icon web server. The user may link shortcut functions including applications to the objects 11 to 17 individually.

FIG. 6B illustrates a lock screen on which objects 11 to 19 are regularly arranged according to another embodiment of the present invention, and the objects 11 to 19 may be arranged apart from each other in the form of a matrix of rows and columns. In FIG. 6B, an unlock command may correspond to a pattern that is drawn depending on a touch input, and the objects 11 to 19 may be located at each vertex of the pattern.

Although a predetermined number of objects are displayed on the touch screen 190 in each of FIGs. 6A and 6B, the number of objects displayed on the touch screen 190 may be subject to change. In any case, it is preferable that two or more objects are displayed to specify the order of objects, or to form a pattern.

Referring back to FIG. 5, in step 510, the controller 110 determines whether any one unlocking method is selected from among the displayed unlocking method items. If any one unlocking method is selected, the controller 110 displays a plurality of objects arranged on the lock screen, in step 515. On the other hand, if no unlocking method is selected, the controller 110 returns to step 505. The objects on the lock screen are editable, and replaceable with other objects. In step 520, the controller 110 determines the order of a predetermined number objects among the plurality of objects.

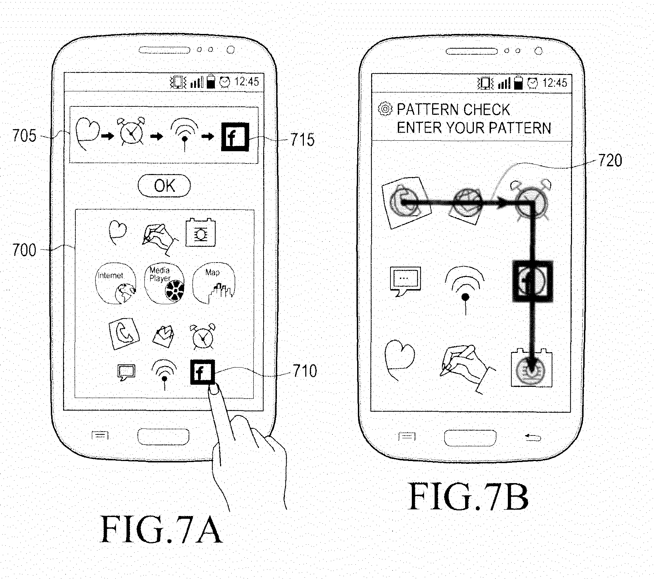

For example, referring to FIG. 7A, a plurality of objects 700 displayed on the touch screen 190 may be sequentially touched one by one by the input means such as the user's finger and the stylus pen. As the objects are sequentially touched, the order of a predetermined number of objects 705 is determined, and the last touched object 710 may be located in the last position 715 of the order of objects. It should be noted that the objects displayed in the object list 700 are linked to their associated applications or shortcut functions in advance.

Alternatively, referring to FIG. 7B, the order of objects is set by touching at least one of the plurality of objects displayed on the touch screen 190, and then making a gesture to sequentially drag some objects on the touch screen 190 with the input means while maintaining the touch. The touch input of dragging some of the objects arranged in a lattice form is referred to as a lock pattern 720.

In step 525, the controller 110 determines whether the setting is completed. If the setting is completed, the controller 110 stores the order of objects for the selected unlocking method as an unlock command in step 530. Although the order of objects may be stored as an unlock command, the pattern drawn depending on the user's touch input may also be stored as an unlock command as illustrated in FIG. 7B.

Although only the order of objects is set in FIG. 5 on the assumption that an application is specified for each object in advance, it is possible to add a process of specifying an object selected by the user for each of two or more applications and then creating a lock screen including the specified objects. The specified objects include at least one of user created icons, user created widgets, and icons representing user created documents in a specific file format.

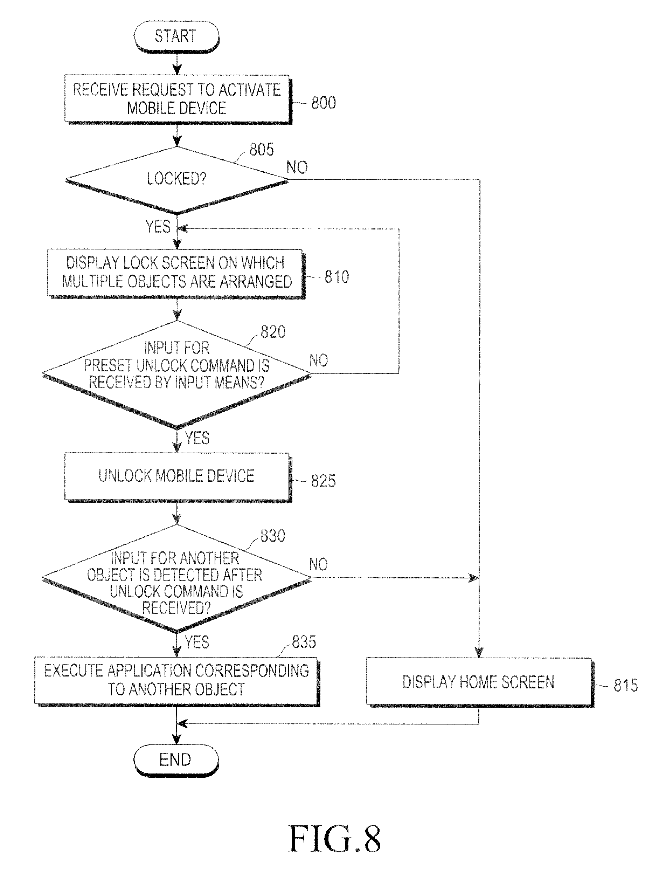

FIG. 8 is a flowchart illustrating a method for executing a specific application upon unlocking in a mobile device according to an embodiment of the present invention.

Referring to FIG. 8, upon receiving a request to activate the mobile device 100 in step 800, the controller 110 determines in step 805 whether the mobile device 100 is locked. For example, the controller 110 may receive the activation request as the user presses or pushes the Home button 161a or the Power/Lock button 161d.

If the mobile device 100 is not locked, the controller 110 displays the home screen in step 815. According to an embodiment of the present invention, the home screen may be a screen on which the same objects as those on the lock screen are arranged. Although it is assumed in FIG. 8 that the mobile device 100 displays the home screen if it is not locked, the mobile device 100 may load the most recently used application and display its application execution screen. On the other hand, if the mobile device 100 is locked, the controller 110 displays the lock screen on which a plurality of objects is arranged, in step 810. The plurality of objects on the lock screen may be arranged depending on the preset unlocking method. For example, if the mobile device 100 is locked, the lock screen in FIG. 6A or 6B may be displayed.

In step 820, the controller 110 determines whether an input corresponding to a preset unlock command is received by the input means. Specifically, according to an embodiment of the present invention, in the case where the unlocking method that uses the order of a set of objects is set, the controller 110 determines whether two or more objects among the plurality of objects are consecutively touched by the input means, and determines whether the order of the consecutively touched objects corresponds to an unlock command having a preset order of objects. In other words, the controller 110 compares the order of the consecutively touched objects with the order of objects for the preset unlock command, and determines whether the order of the consecutively touched objects coincides with the preset order of objects. If the order of the consecutively touched objects coincides with the preset order of objects, the controller 110 determines that an unlock command is received. Upon receiving an input corresponding to the preset unlock command by the input means, the controller 110 unlocks the mobile device 100 in step 825.

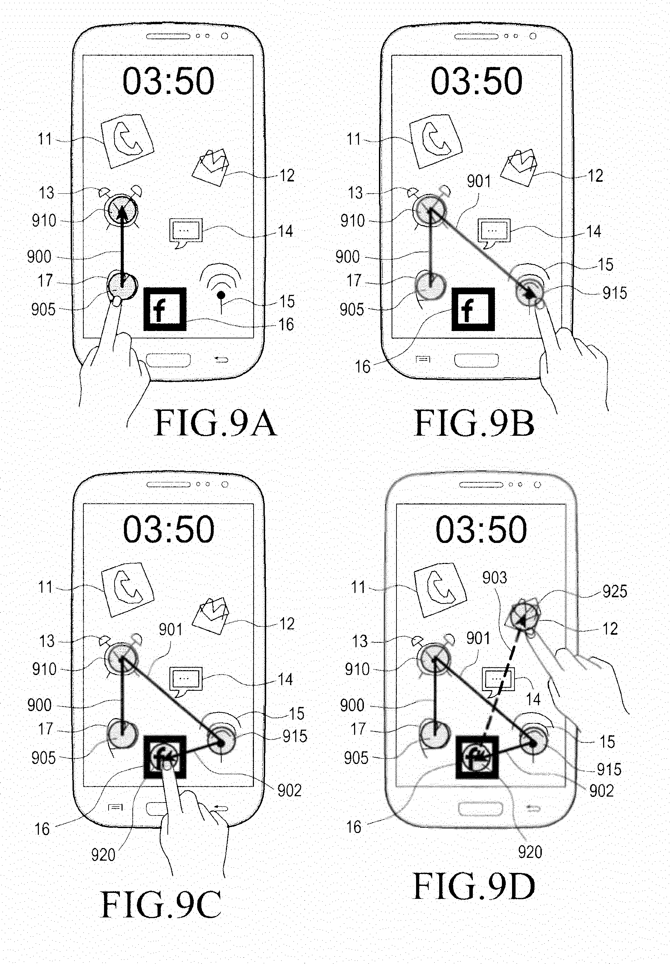

FIGs. 9A to 9D illustrate examples of a lock screen corresponding to a case where an unlocking method that uses the order of a set of objects is set according to an embodiment of the present invention. The arrangement of objects on the lock screen is subject to change depending on the user settings. In FIGs. 9A to 9D, an unlocking process will be described on the assumption that a preset unlock command corresponds to an order of a heart-shaped object 17, a clock-shaped object 13, a WiFi-shaped object 15, and a character-shaped object 16.

Referring to FIG. 9A, if the heart-shaped object 17 and the clock-shaped object 13 among the plurality of objects 11 to 17 on the lock screen are consecutively touched by the input means, the controller 110 changes the color of areas 905 and 910 covering their objects 17 and 13 which are touched by the input means. Accordingly, the user may easily identify the intuitively touched objects. The controller 110 may also display a path 900 which indicates that the heart-shaped object 17 and the clock-shaped object 13 have been consecutively touched.

In FIGs. 9B and 9C, the color of areas 905, 910, 915 and 920 covering their objects 17, 13, 15 and 16 are changed as the WiFi-shaped object 15 and the character-shaped object 16 are consecutively touched after the touch of the heart-shaped object 17 and the clock-shaped object 13, and paths 900, 901 and 902 may be displayed, along which the objects 17, 13, 15 and 16 are dragged after being consecutively touched.

Therefore, if the order of the objects 17, 13, 15 and 16, which are included in the trajectory along which the objects 17, 13, 15 and 16 are touched and then dragged by the input means as in FIGs. 9A to 9C, coincides with the order of objects for a preset unlock command, the controller 110 determines that an unlock command is received. Accordingly, the controller 110 may unlocks the mobile device 100.

Although it is assumed in FIGs. 9A to 9C that any one of objects corresponding to an unlock command among the plurality of objects 11 to 17 on the lock screen is touched, and then the objects are sequentially selected while the touch is being kept, the controller 110 may determine that the objects corresponding to the unlock command are sequentially touched and selected one by one by the input means such as the user's finger and the stylus pen. Accordingly, the order of objects which are selected one by one by an individual touch method may be compared with the order of objects for a preset unlock command. FIG. 9D is discussed below.

On the other hand, according to another embodiment of the present invention, if the unlocking method that uses a predetermined pattern is set, the controller 110 may determine whether a pattern that is drawn with two or more objects selected by the input means coincides with a preset unlock command. If it is determined that the pattern drawn by the input means corresponds to an unlock command that is predefined to unlock the mobile device 100, then the controller 110 unlocks the mobile device 100.

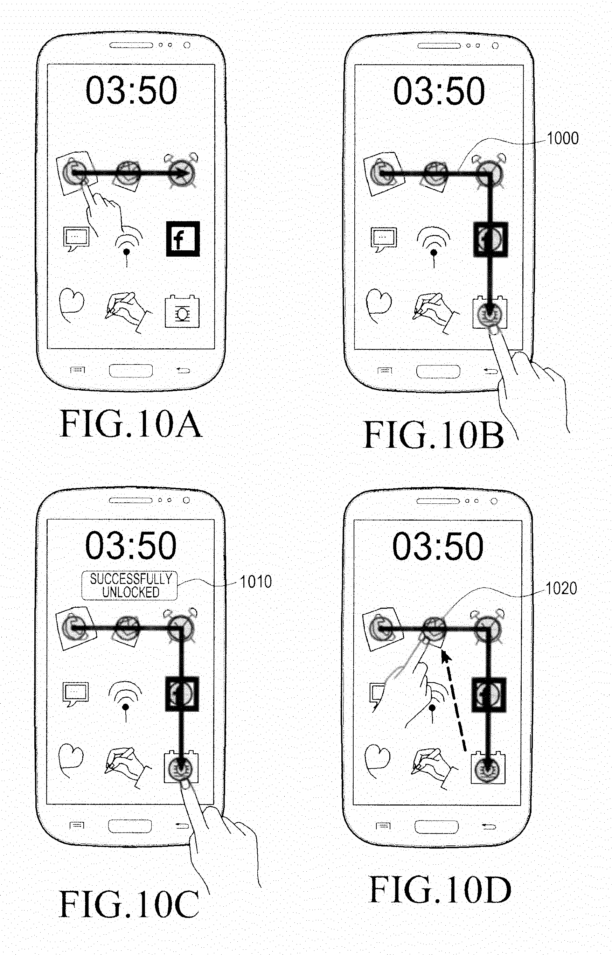

FIGs. 10A to 10D illustrate examples of an unlocking process on a lock screen according to another embodiment of the present invention. In FIGs. 10A to 10D, an unlocking process will be described on the assumption that a preset unlock command has a '┐'-shaped pattern.

FIGs. 10A and 10B illustrate examples of a trajectory 1000 along which objects are dragged after being touched by the input means in the structure where the objects are arranged in a 3x3 matrix on the lock screen.

FIG. 10C illustrates a case where if the input means is placed on the last object of the '┐'-shaped pattern, unlocking is notified in the form of message 1010. Although it is assumed in FIG. 10C that the mobile device 100 notifies unlocking to the user by outputting an unlock message, the mobile device 100 may notify unlocking even through vibrations, alarm and the like. A message indicating the unlocking may be output, if the user keeps a hold state in the last object for a predetermined time without taking away the input means while drawing a pattern using the input means. In this case, as soon as the touch is released from the last object, the home screen may be displayed, or the recently used application may be loaded and its application execution screen. Referring back to FIG. 8, in step 830, after receiving the unlock command and unlocking the mobile device 100, the controller 110 determines whether an input for another object is detected. If an input for another object is not detected, the controller 110 displays the screen (e.g., the home screen) corresponding to the unlocking in step 815. For example, if the touch by the input means is released on the last object 16 among the objects for the preset unlock command in FIG. 9C, the controller 110 displays the home screen or the recently used application execution screen upon unlocking. Similarly, the controller 110 displays the home screen or the recently used application execution screen when the touch is released on the last object of the pattern in FIG. 10C. FIG. 10D is discussed below.

On the other hand, if an input for another object is detected, the controller 110 executes an application corresponding to another object in step 835. For example, if another object (e.g., the mail-shaped object 12) is touched as in FIG. 9D while the touch is kept for a predetermined time by the input means on the last object 16 among the objects 17, 13, 15 and 16 for the preset unlock command, the controller 110 determines that a touch is made to execute an application corresponding to another object (e.g., the mail-shaped object 12).

FIG. 9D illustrates the mail-shaped object 12 that is touched after the touch of the last object 16 among the objects for the preset unlock command. Referring to FIG. 9D, if the mail-shaped object 12 is consecutively touched after the touch of the last object 16, the controller 110 changes the color of an area 925 covering the mail-shaped object 12, thereby making it possible to show that an object corresponding to the application to be executed is selected. The controller 110 may also display a path 903 from the last object 16 to the mail-shaped object 12.

Although it is assumed in FIG. 9D that if the user desires to execute an application corresponding to the mail-shaped object 12, the user may move the touch position to the mail-shaped object 12 after the user has kept the touch on the last object 16 for a predetermined time, the controller 110 may apply various methods such as a method of displaying the color of the path 903 between the last object 16 and the object 12 to be executed, differently from the color of the paths 900, 901 and 902 among the objects, or a method of displaying the path 903 with a solid line and the paths 900, 901 and 902 with a dotted line or vice versa, thereby making it possible for the user to easily determine whether the object to be executed is selected. As soon as it is determined that the order of objects on the trajectory along which a drag input is made after a touch input, coincides with the preset order of objects, the controller 110 provides notification for unlocking to the user, guiding or requesting the user to select the next object that the user desires to execute.

FIG. 10D illustrates a case where the user selects an object 1020 that the user desires to execute, after entering the unlock command corresponding to the '┐'-shaped pattern. In FIG. 10D, like in FIG. 9D, the controller 110 may guide or request the user to select the next object in the same manner.

As described above, according to an embodiment of the present invention, the same objects as those on the home screen may be arranged on the lock screen, making it possible for the user to quickly execute his/her desired application like on the home screen, even on the lock screen.

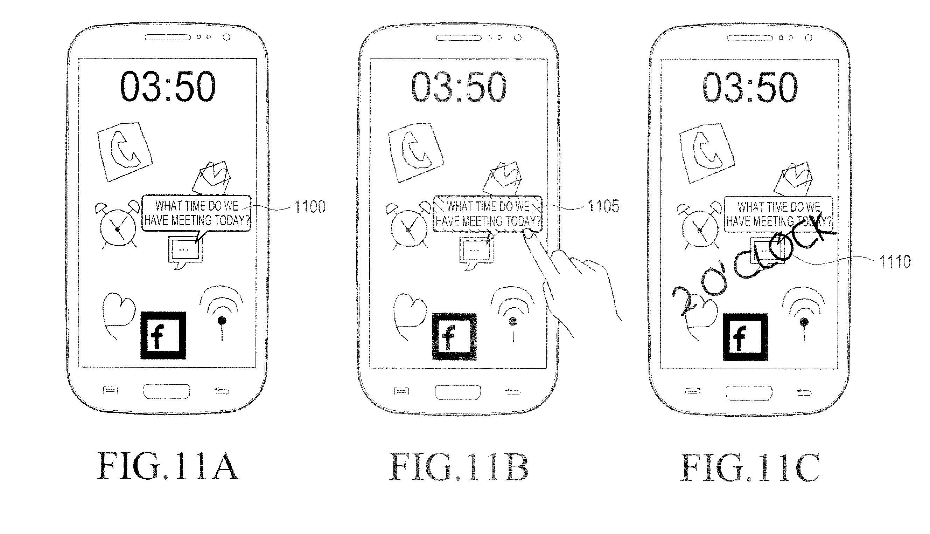

So far, a description has been made of the case where the user may directly select a desired object on the lock screen to execute an application corresponding to the object. Another embodiment of the present invention provides a method of more efficiently utilizing the lock screen, and a description thereof will be made with reference to FIGs. 11A to 11C.

FIG. 11A illustrates a specific application that is executed while a lock screen is displayed. The controller 110 determines whether an event occurs which corresponds to any one of a plurality of objects arranged on the lock screen while the lock screen is displayed, and if the event occurs, the controller 100 displays contents of the occurred event on the lock screen.

Specifically, FIG. 11A illustrates a case where as an event corresponding to an SNS application occurs, contents 1100 of the occurred event may be displayed in a position adjacent to the chat window-shaped object 14 corresponding to the SNS application. Upon receiving an SNS message, the controller 100 determines that an event has occurred. In another embodiment of the present invention, the user may directly use or enjoy the SNS application on the lock screen. For example, the user selects the contents of the occurred event by putting the input means on the window in which the contents 1105 of the occurred event are displayed, like in FIG. 11B. By doing so, the user may enter a response to the contents of the occurred event. The user may directly enter a response 1110 to the contents of the occurred event on the lock screen like in FIG. 11C, and the entered response may be sent to the other party.

In this way, the user may directly view or read on the lock screen the contents of an occurred event related to messages, e-mails, calls, chats, or the like, and may also directly handwrite a response on the lock screen and send the response to the other party, so the user directly executes an application without unlocking the lock screen.

It can be appreciated that embodiments of the present invention may be implemented in the form of hardware, software or a combination thereof. The software may be stored in volatile or non-volatile storage (e.g., erasable/rewritable ROM), memory (e.g., RAM, memory chip, memory device, memory Integrated Circuit (IC) and the like), or optically or magnetically recordable machine (e.g., computer)-readable storage media (e.g., Compact Disk (CD), Digital Versatile Disk (DVD), magnetic disk, magnetic tape and the like). Storage that can be mounted in the mobile device may be an example of the machine-readable storage media suitable to store a program or programs including instructions for implementing embodiments of the present invention. Therefore, the present invention may include a program including codes for implementing the method as defined by the appended claims, and the machine-readable storage media storing the program. The program may be electronically carried by any media such as communication signals which are transmitted through wired or wireless connections.

In addition, the mobile device may receive and store the program from a program server to which the mobile device is connected by wires or wirelessly. The program server may include a memory for storing a program including instructions for performing the quick application execution method on the lock screen by the mobile device, and information needed for the quick application execution method on the lock screen, a communication unit for performing wireless communication with the mobile device, and a controller for transmitting the program to the mobile device automatically or at the request of the mobile device.

As is apparent from the foregoing description, a specific application may be quickly executed upon unlocking, making it possible to increase the convenience of the mobile device. The present invention provides a user-specific locking method, thereby enhancing the security of the mobile device and allowing the user to directly enter his/her desired function. In other words, the present invention provides a security-enhanced user interface that the user may easily use.

In addition, the present invention may provides a lock screen on which the objects, which are directly created or set by the user, are arranged, and these objects provide a user customized lock screen since the objects correspond to the applications that the user frequently uses.

While the invention has been shown and described with reference to certain embodiments thereof, it will be understood by those skilled in the art that various changes in form and details may be made therein without departing from the scope of the invention as defined by the appended claims.

## Claims

1. A method for quickly executing an application on a lock screen in a mobile device, the method comprising:
displaying a lock screen on which a plurality of executable objects are displayed;
receiving an unlock command by an input means;
determining whether the received unlock command coincides with a preset unlock command;
unlocking the lock screen if the received unlock command coincides with the preset unlock command; and
executing an application associated with an object corresponding to a last position of the input means.

2. The method of claim 1, wherein the received unlock command includes objects, which are consecutively touched by the input means, among the plurality of executable objects and wherein the preset unlock command corresponds to an order of a set of objects, which is set by a user.

3. The method of claim 2, wherein determining whether the received unlock command coincides with the preset unlock command comprises:
determining whether two or more objects among the plurality of executable objects are consecutively touched by the input means; and
determining whether an order of the consecutively touched objects coincides with an order of objects for the preset unlock command.

4. The method of one of claims 1 to 3, wherein the preset unlock command corresponds to a predetermined pattern that is drawn using the input means with two or more objects selected by a user.

5. The method of one of claim 1 to 4, wherein the plurality of executable objects include at least one of shortcut icons for executing applications, widgets, icons representing documents in a specific file format, photos, and folders.

6. The method of one of claims 1 to 5, wherein the plurality of executable objects are randomly arranged and displayed on the lock screen or arranged and displayed on the lock screen in a form of a matrix of rows and columns.

7. The method of one of claims 1 to 6, wherein the plurality of executable objects represent most recently used applications according to a user's history.

8. A mobile device for quickly executing an application on a lock screen, the mobile device comprising:
a display configured to display a lock screen on which a plurality of executable objects are displayed; and
a controller configured to determine, upon receiving an unlock command by an input means, whether the received unlock command coincides with a preset unlock command, to unlock the lock screen if the received unlock command coincides with the preset unlock command, and to execute an application associated with an object corresponding to a last position of the input means.

9. The mobile device of claim 8. wherein the received unlock command includes objects, which are consecutively touched by the input means, among the plurality of executable objects and wherein the preset unlock command corresponds to an order of a set of objects, which is set by a user.

10. The mobile device of claim 8 or 9, wherein if two or more objects among the plurality of executable objects are consecutively touched by the input means, the controller compares an order of the consecutively touched objects with an order of objects for the preset unlock command, and unlocks the lock screen if the order of the consecutively touched objects coincides with the order of objects for the preset unlock command.

11. The mobile device of one of claims 8 to 10, wherein the plurality of executable objects include at least one of shortcut icons for executing applications, widgets, icons representing documents in a specific file format, photos, and folders.

12. The mobile device of one of claims 8 to 11, wherein the plurality of executable objects are randomly arranged and displayed on the lock screen or arranged and displayed on the lock screen in a form of a matrix of rows and columns.

13. The mobile device of one of claims 8 to 12, wherein the plurality of executable objects represent most recently used applications according to a user's history.

14. The mobile device of one of claims 8 to 13, wherein the preset unlock command corresponds to a predetermined pattern that is drawn using the input means with two or more objects selected by a user.

15. The mobile device of claim 14, wherein if two or more objects among the plurality of executable objects are consecutively touched by the input means, the controller compares a pattern that is drawn with the consecutively touched objects, with the predetermined pattern, and unlocks the lock screen if the drawn pattern coincides with the predetermined pattern.
